# EUROPEAN PATENT APPLICATION

(11) **EP 1 498 877 A1**
(43) Date of publication of application: **19.01.2005**
(21) Application number: 03016038.6
(22) Date of filing: 15.07.2003
(51) Int. Cl.: G11B 5/48, G11B 5/49, G11B 5/31, G11B 5/187

(54) **Write head layout**

(71) Applicant: O-Mass AS, Kjelsas, 0411 Oslo (NO)
(72) Inventor: Rubas, Ladislav, 3408 Tranby (NO); Rudi, Guttorm, 1472 Fjellhamar (NO); Nymoen, Arne, 1061 Oslo (NO); Rasstad, Jom, 0690 Oslo (NO)
(74) Representative: Tönhardt, Marion, Dr.

(57) **Abstract**

A matrix write head for recording data on recordable magnetic media includes an arrangement of write heads on a substrate. The write heads have write gaps which are arranged in a plough configuration. A very small guard band, or none at all, is provided between the tracks written by the write heads. Read gaps may be provided on the substrate, as well as edge detectors.

## Description

### BACKGROUND OF THE INVENTION

### Field of the Invention

The present invention relates generally to a magnetic recording head and, more particularly, to a matrix-type thin film magnetic recording head for recording of multiple tracks on recording tapes, for example.

### Discussion of the Related Art

In order to satisfy the increasing performance requirements of magnetic storage devices (for example, hard-discs, tape drives, or floppies - also termed floppy discs), ever increasing area densities and data rates are required. The area density is limited by lateral tape motions, residual head servo tracking errors, mechanical tolerances on the head, thermal and hygroscopic coefficient of expansion of the media, etc.

Writing and reading simultaneously of several tracks in parallel seems to be an increasingly widely used approach how to achieve both high area densities and high data rates. On standard multiple heads, the minimum distance which is necessary between neighboring heads (mostly due to the pitch of the excitation coil) leads to a large distance between the outermost tracks. This kind of read/write head also use sequential interleaved writing, where adjacent tracks are written at different times. To avoid interleave writing, the matrix array of heads in which adjacent tracks can be written simultaneously with no or little guardband was already proposed in U.S. Patent No. 5,124,869, U.S. Patent No. 5,671,106, U.S. Patent No. 5,973,890, U.S. Patent No. 5,933,940, or in co-pending application, attorney Case No. P00,1952, entitled "Fully Integrated Matrix Magnetic Recording Head With Independent Control."

A typical layout of a write head for magnetic media is based on a write gap which is placed substantially in the center of the outline of the whole write head (which is primarily made up of the coil and poles). This layout will work well for one row (or column) of data, but a problem will occur when a new row (or column) is to be added to create additional adjacent tracks. Two adjacent heads can not be placed close to each other in the direction of the gap width, and at the same time close to each other in the direction of the movement of the recording media. As a result, the last (or first) head of one row (or column) and the first (or last) head of an adjacent row (or column) are forced to be spaced from each other in the direction of movement of the recording media. This makes such a layout sensitive to angular misalignment between the matrix array of heads and the recording media. A small angular misalignment between the matrix array of heads and the recording media will cause overwriting (or generation of an empty guard band) between the last (or first) head of one row(or column) and the first (or last) head of an adjacent row (or column). This problem could be solved by introducing an additional guard band between two adjacent rows (or columns), as in the co-pending application, attorney Case No. P00,1952, entitled "Fully Integrated Matrix Magnetic Recording Head With Independent Control" but such a solution reduces the usable area of the media and thus also usable capacity of the recording media.

The second disadvantage is that the total width of the pack of tracks written by such a pattern layout of the matrix array of heads will significantly vary in width due to any angular misalignment between the matrix array of the heads and the recording media. By tilting the head in one direction, the track path width increases, and by tilting the head in the opposite direction, the track path width decreases. As the track path width expands, an additional guard band between adjacent track packs is required. This is caused by the fact that the heads related to outermost tracks of one track path, including several adjacent rows (or columns) of write heads, have a large distance from one another in the direction of movement of the recording media.

With any angular misalignment between the matrix array of heads and the recording media, the written pattern of tracks shows an additional change in the track pitch and also the track width, especially in the case where adjacent tracks overwrite one another.

As the read head will have in some way to match and read the written tracks, the above mentioned effects of varying the track pitch, the track width and the track pack width, makes the readout of the data complicated.

Above described problems may be reduced by using an angular adjustment between the tape and the matrix write head, which is often addressed as an azimuth alignment. Because of the dynamic character of tape to head angular deviations, a dynamic azimuth servo may be required.

Another problem occurs as the track width becomes smaller. With decreasing track width, there is an increase in the requirement for track width tolerances in order to retain an acceptable signal to noise ratio of the readout signal. On recent matrix heads are write gaps aligned adjacent to each other (the gap pitch and the gap width are basically the same), so that both ends of each write gap are involved in defining the track width. Tolerances related to position of the gap ends will thus cause either overwrite or a guardband between two adjacent tracks. Introducing a guardband will bring "unknown" noise, which is difficult to compensate for, to the signal, and contribute thus to reduction of signal to noise ratio during readout.

This problem can be overcome by making the write gap width larger than the write gap pitch and ensure in this way that there is always overwrite between two adjacent tracks. In this way the width of every track (except of the last one) is defined by a part being overwritten by a next adjacent track. Occurrence of a guardband between any two adjacent tracks in the same track pack will be thus eliminated. Track width will be defined by same edges of two adjacent write gaps, and write gap width will thus become less critical. Elimination of guardbands will help also in the case where angular misalignment between write head and movement of recording media would introduce guardband between adjacent tracks.

Another problem is related to the readout of the outermost tracks. As the tape is moving in a lateral direction, the read head will experience an "unknown" noise at the outermost tracks. This is due to the fact that the outermost edges of outermost tracks create a boundary with guardband which will be partly read by the read head, and which carries either no information, old information or information from an adjacent package of tracks. This problem can be reduced by making the outermost tracks slightly wider, so that the readout of these tracks will become less sensitive with respect to lateral movement of the tape.

As mentioned earlier, several matrix write head configurations are described in U.S. Patent No. 5,124,869, U.S. Patent No. 5,671,106, U.S. Patent No. 5,973,890, U.S. Patent No. 5,933,940, or in the co-pending application, attorney Case No. P00,1952, entitled "Fully Integrated Matrix Magnetic Recording Head With Independent Control". Nevertheless these patent documents applications do not provide a solution to the above-mentioned problems.

### SUMMARY OF THE INVENTION

Accordingly, several objects and advantages of the various embodiments of the present invention are set forth below, which objects and advantages need not be contained in every embodiment of the invention:
- to provide a write head configuration that will, due to the position of pole pieces with respect to other parts of this head, allow the placement of two write heads adjacent to or very close (a distance of one track width) to each other without any offset in the direction of media movement;
- allow for adjacent rows (or columns) in the matrix head with a significantly reduced requirement for azimuth alignment;
- eliminate the guard band between adjacent rows (or columns) in the matrix head;
- provide at least one pair of heads, on one write matrix head substrate, that are aligned to each other in the direction of media movement and that can be used as read heads for azimuth servoing using a servo track;
- optionally provide at least one head , on one write matrix head substrate, that is aligned to one of the write heads in the direction of media movement and that can be used as a read head for azimuth servoing using a data track; and
- optionally provide at least one head on the write matrix head substrate, that can be used as read head for servoing of lateral motion or recording media using a servo track.
- provide a sensor for edge monitoring that will allow the monitoring of the write chip edge condition and could thus be used for write chip edge wear monitoring and/or for write chip edge monitoring during the assembly/lapping process.
- provide a write gap matrix layout that will ensure the track width to be defined by being overwritten by an adjacent track and eliminating the occurrence of a guardband between two adjacent tracks.

Further objects and advantages of the invention will become apparent from a consideration of the drawings and the ensuing description.

### BRIEF DESCRIPTION OF THE DRAWINGS

The present invention will be more thoroughly described with reference to the accompanying drawings:
Figure 1 is an isometric view of a single write head shown disembodied from its substrate;
Figure 2 is a top view of the single write head of Figure 1;
Figure 3 is a bottom view of the single write head of Figure 1;
Figure 4 is a bottom view of an interface arrangement of two rows in a matrix write head with a very small guard band, showing the write heads of the two rows;
Figure 5 is a bottom view of another interface arrangement of two rows in a matrix write head with no guard band;
Figure 6 is a schematic representation of a plough configuration of rows in a matrix write head (with eight write heads in one row);
Figure 7 shows a plough configuration of two rows in the matrix write head (with 32 write heads in each row);
Figure 8 shows a plough configuration as in Figure7 but with four rows in the matrix write head;
Figure 9 shows a plough configuration of two rows in the matrix write head (with 32 write heads in each row), where the gap position in each head changes more gradually from one to another end of the row;
Figure 10 shows a plough configuration as in Figure9 but with four rows in the matrix write head;
Figure 11 shows a plough configuration of gaps (or write heads) with additional read heads;
Figure 12 shows a plough configuration of gaps (or write heads) in two rows with additional read heads that are placed between the rows of write heads;
Figure 13 shows another plough configuration of gaps (or write heads) in four rows with additional read heads that are placed between the rows of write heads;
Figure 14 is a plan view which shows a configuration of sensors for substrate edge monitoring;
Figure 15 is a cross section through the sensor of Figure 14 for substrate edge monitoring;
Figure 16 is a cross section through another configuration of the sensor for substrate edge monitoring;
Figure 17 shows single row layout of write gaps matrix write head configured for overwrite between adjacent tracks;
Figure 18 shows similar layout as Figure 17, but with two rows in plough formation; and
Figure 19 is a further layout with wider outermost tracks.

### DETAILED DESCRIPTION OF THE PREFERRED EMBODIMENTS

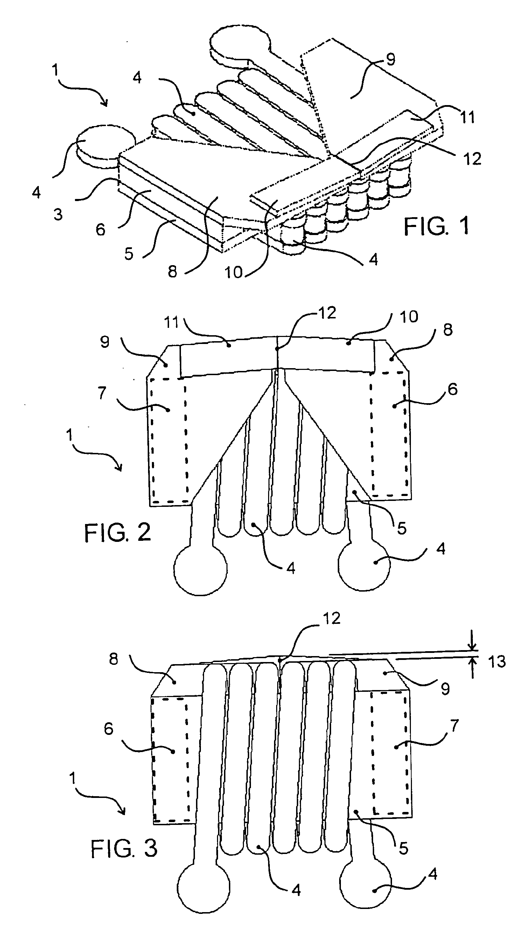

**Figure 1** shows an individual write head corresponding to one cell of the matrix array. The illustrated write head, which is formed of thin films, is shown disembodied from the matrix structure of which it forms a part during use of the write head. The write head is formed by a magnetic circuit 3 and an excitation conductor 4 , all being fabricated on a non-magnetic substrate or wafer 1. The magnetic circuit 3 is formed of a bottom pole piece 5, two pillars 6 and 7 (Figure 2) and two concentrators 8 and 9. Directly on the concentrators are two poles 10 and 11 that form a writing gap 12. The substrate 1, also referred to as a chip or wafer, is indicated generally in the figure as 1, and is understood to be the planar member on which or in which the write head is formed.

**Figure 2** shows a top view of the write head, including an outline view of the pillars 6 and 7 beneath and at the sides of the concentrators 8 and 9. The concentrators 8 and 9 overlie the excitation conductors 4. The pole pieces 10 and 11 are angled somewhat relative to one another and to the body of the write head to form a peak.

In the bottom view of **Figure 3**, the poles 10 and 11 are disposed relative to other parts of the head in such way that the outermost side of the write gap 12 has an offset 13 to the other parts of the head. This means that the outermost side of the gap 12 is at the same time the outermost point of the head. The relationship of the excitation conductors 4 to the bottom pole piece 5 is apparent. Excitation signals through the excitation conductors 4 generate the magnetic signal at the write gap 12 to write the data to the magnetic media as the media and the write gap are moved relative to one another.

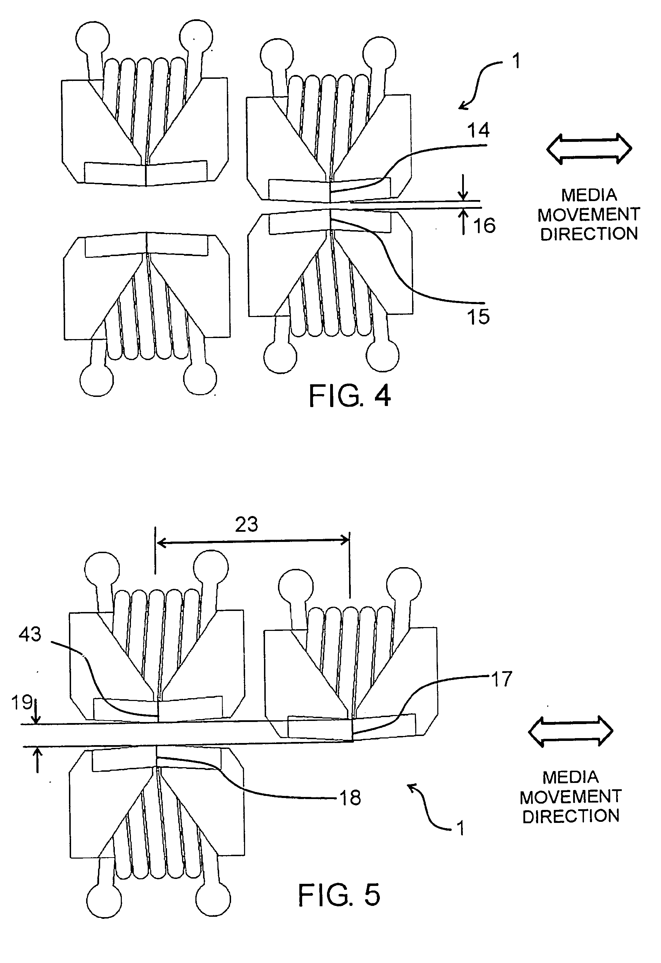

In **Figure 4**, to the right in the figure, are shown two write gaps (or heads) 14 and 15 in write heads that are placed adjacent to each other without being offset in the direction of the tape movement. In other words, the write gaps 14 and 15 are aligned with one another. There is no or only a very small guard band 16 between the write gaps 14 and 15 (as may be necessary to avoid an interaction between the gaps). To the left in the figure is another pair of write gaps or heads aligned with one another. This second pair of heads is spaced back from the center line between the heads 14 and 15 and so forms a part of the plough pattern which will be shown in greater detail hereinafter.

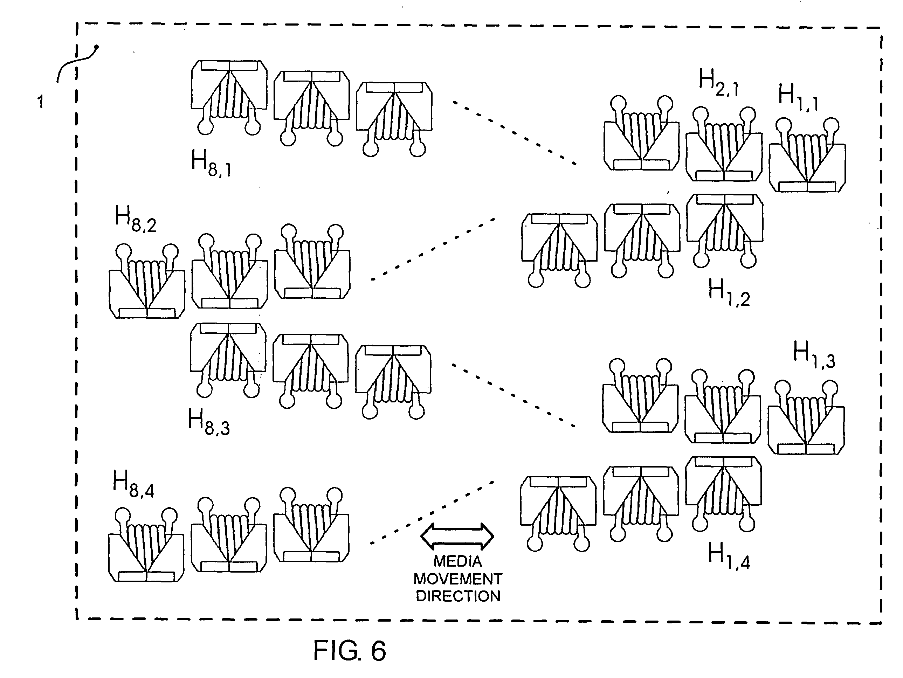

In **Figure 5** is shown another solution to the head position where write gaps 17 and 18 create two adjacent tracks without any guard band. The write gaps 17 and 18 are offset in the direction of tape movement relative to one another. A further write gap 43 is provided aligned with the write gap 18. A distance 19 between the write gaps 43 and 18 is equivalent to the width of the gaps 17, 18 and 43. In this configuration the column pitch 23, which is the pitch between two neighbor heads in the direction of media movement, is equal for two gaps 43 and 17 in one row, as well as for two neighbor gaps 17 and 18 in two adjacent rows.

In the foregoing, a few of the write heads are shown arranged relative to one another to illustrate the principles of the invention. **Figure 6** shows a matrix of the write heads arranged in four rows, where the individual rows have write heads H_{1,1} - H_{8,1}; H_{1,2}- H_{8,2} ; H_{1,3}- H_{8,3} and H_{1,4}- H_{8,4}. The rows are arranged in a kind of plough configuration where a track generated by a head H_{1,2} is adjacent to a track generated by a head H_{1,1} ; a track generated by a head H_{8,3} is adjacent to a track generated by a head H_{8,2,} and a track generated by a head H_{1,4} is adjacent to a track generated by a head H_{1,3}.

When looking at the consequences of angular deviation between the recording media and the write head, the two tracks written by the heads from adjacent rows which are closest to one another, like the heads H_{1,1} and H_{1,2}, will have the same conditions as any two adjacent heads within one row, like the heads H_{1,1} and H_{2,1}. The heads from the two adjacent rows have their poles facing each other so that there is no guard band between these adjacent rows.

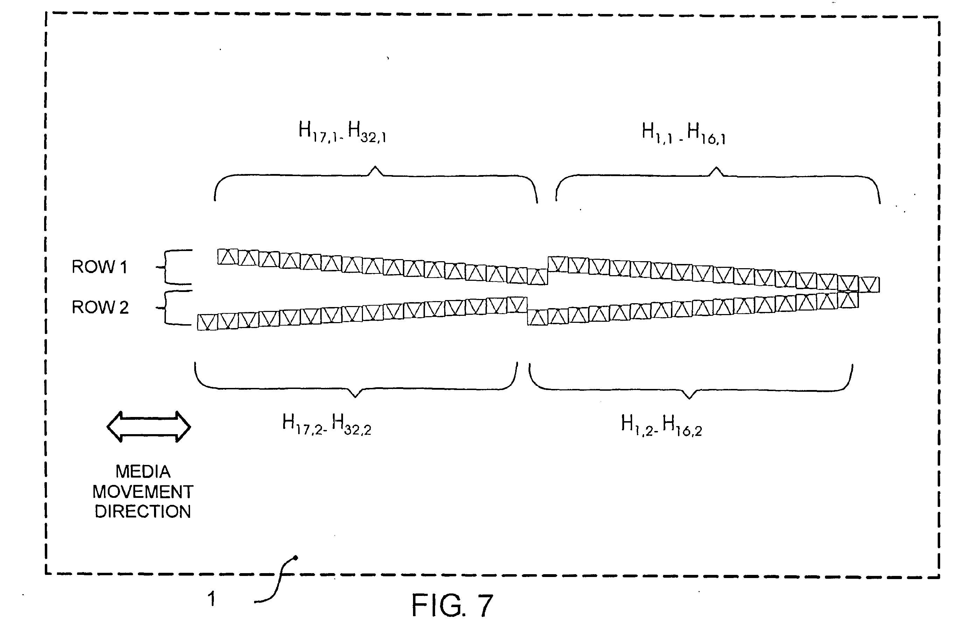

**Figure 7** shows another example of a matrix write head arranged in two rows, where the write heads are shown schematically by symbols. Row one is created by the write heads H_{1,1}-H_{16,1} and H_{17,1}-H_{32,1} and row two by the heads H_{1,2} - H_{16,2} and H_{17,2}-H_{32,2}. The heads H_{1,1}- H_{16,1} of row one that are closest to row two and the heads H_{1,2} - H_{16,2} of row two that are closest to row one, have their poles facing each other. The write gaps H_{17,1} - H_{32,1} and H_{17,2} - H_{32,2} at the ends of the rows which are farther apart from one another have their poles facing away from each other. The substrate 1 on which the heads are provided and which is only indicated generally in the previous figures is shown in Figure 7 in broken outline.

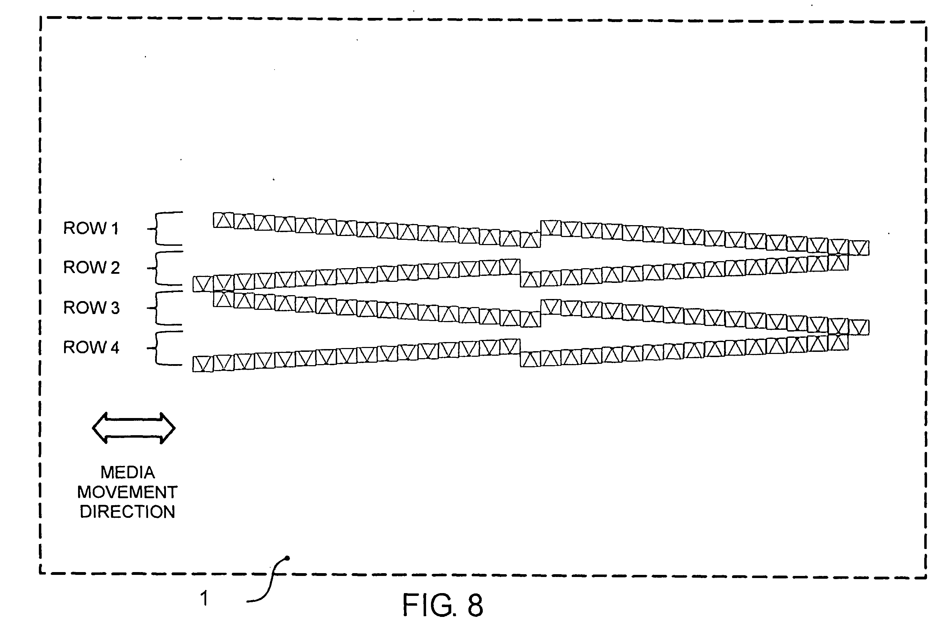

**Figure 8** shows another example of a matrix write head arranged on the substrate 1. The four rows of write gaps, shown schematically, based on the arrangement of two rows shown in **Figure 7**. Specifically, the heads of a row that are closer to the adjacent row of a pair, such as row 1 and row 2, or the pair of row 3 and row 4, are disposed with their write gaps toward one another, whereas the heads of a portion of the row that are farther apart from an adjacent row of the pair of rows are disposed with their write gaps directed away from one another. The result is that the adjacent heads of rows 2 and 3 face each other. This example shows how additional adjacent rows can be appended to provide a larger matrix of write gaps.

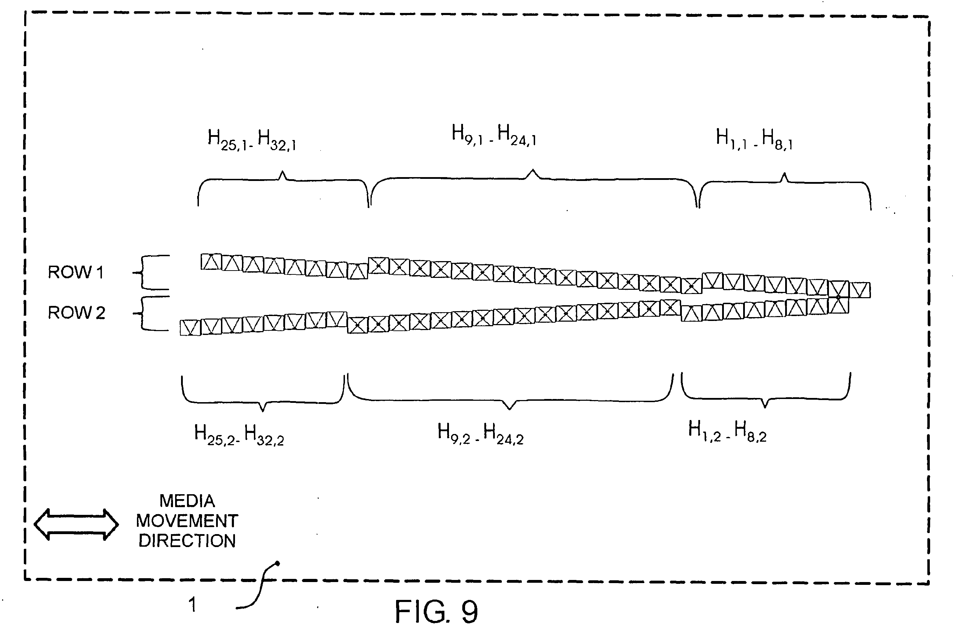

**Figure 9** shows another modification of a matrix write head arranged in two rows, where the heads in the central part of each row have the poles distributed at (or close to) the center of each write head. In this case the central part of row one is represented by the heads H_{9,1} - H_{24,1} and the central part of row two by the heads H_{9,2} - H_{24,2}. The heads H_{1,1} to H_{8,1} have the write gaps facing the adjacent row and the heads H_{25,1} to H_{32,1} of row 1 have the write gaps facing away from the adjacent row. A similar arrangement is provided for the heads H_{1,2} to H_{8,2} and H_{25,2} to H_{32,2}of row two. The media movement direction is indicated as is the substrate 1 on which the heads are provided.

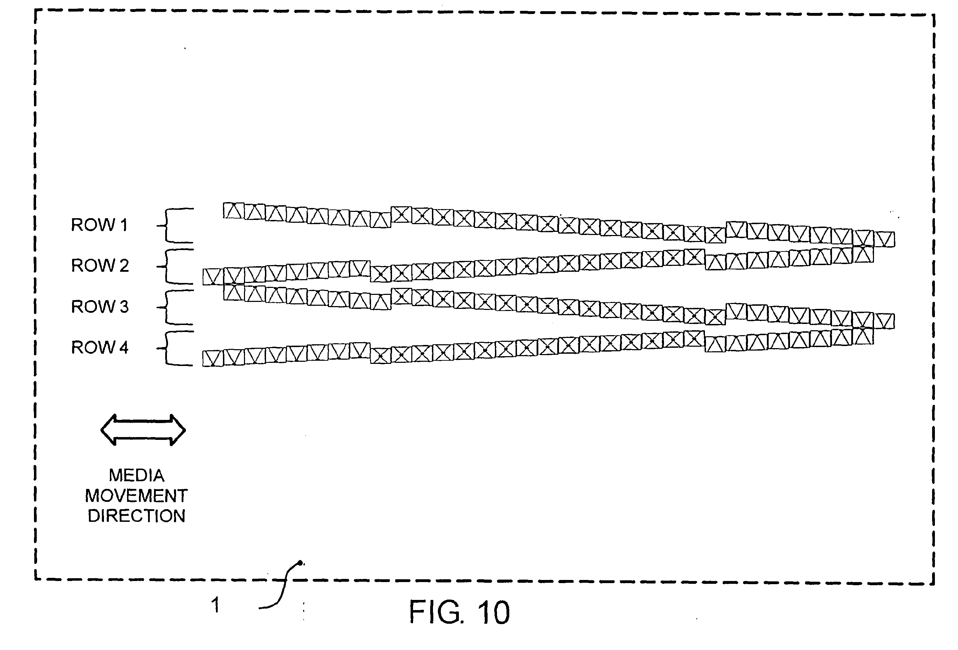

**Figure 10** shows another example of a matrix write head arranged in four rows based on the head arrangement of **Figure 9**. Specifically, the closer heads have the write gaps facing on another, the middle heads of a row have the heads in the middle, and the heads farther from the adjacent row of the pair have the write gaps facing away from one another. The result is that the heads at the portions of the rows 2 and 3 which are closest to one another are facing each other. This example shows how additional adjacent rows can be appended to the matrix.

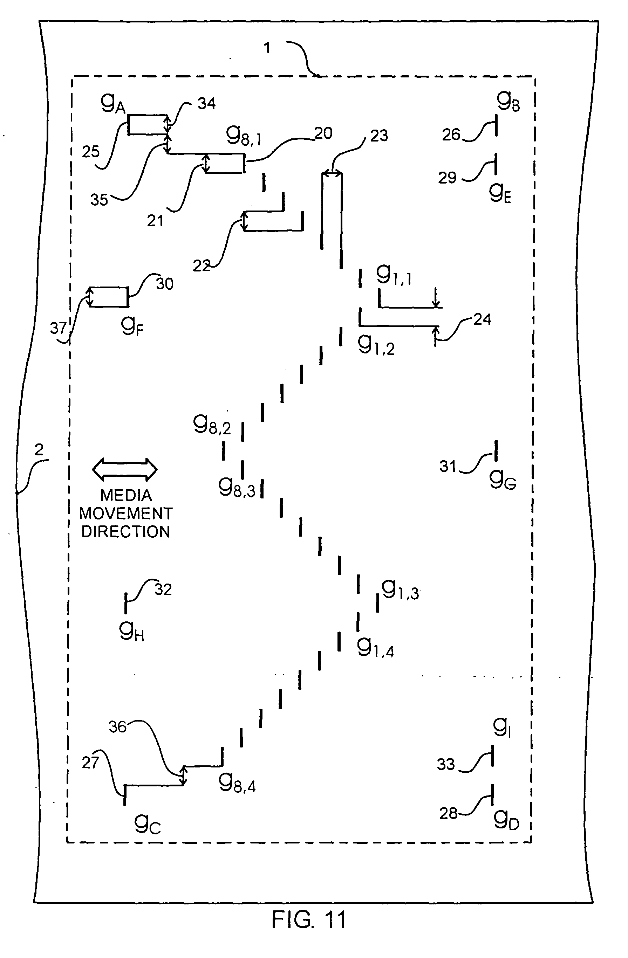

**Figure 11** shows a write matrix head 1 relative to a recording media tape 2, the write matrix 1 having configuration of write gaps 20 organized in rows g_{1,1}-g_{8,1} ; g_{1,2}-g_{8,2} and optionally with additional rows g_{1,3}-g_{8,3} ; g_{1,4}-g_{8,4} ...etc. A write gap width 21 is the same for all write heads and the pitch 22 between two adjacent gaps in one row is equal to a pitch 24 between two adjacent rows.

Additionally to the write gaps 20, several options for a configuration of read gaps (read heads) 25 are shown. The read gaps 25 are organized in order to provide feedback information about the angular and lateral deviation of the write matrix head 1 and the recording media 2. The read gaps 25 (g_{A} and g_{B}) are aligned to each other in the direction of media motion, and provide the possibility to be used simultaneously on one servo track. Data read from the two read gaps and compared provide a determination of the alignment of the read gaps, and thus the matrix head, relative to the servo track. Optional (or additional) read gaps 25 (g_{C} and g_{D}) can be used. The read gaps 25 have a read gap width 34 that can be either the same or different as a write gap width 21. An additional guard band 35 is provided between the read gaps 25 and the outermost write head(s).

Another configuration of read gaps 30 (g_{E} ; g_{F}; g_{G}; g_{H}; g_{I}) is shown. For example the read gap g_{F} is aligned with the write gap g_{1,1} in the direction of media movement and can be used for readout of a track written by the write gap g_{1,1}. This readout can be again used as feedback information about the angular deviation of the write matrix head 1 and the recording media 2. The data written by the write gap is thereafter read by the read gap and the amplitude of the signal from the read gap is indicative of the alignment of the matrix head on the recording media.

The read gap g_{G} in the configuration with the write gap write gap g_{8,2} can be used for the same purpose but for media that is moving in a reverse direction. In other words, a first write gap and read gap pair are aligned for sensing alignment of the matrix head during movement of the recording media in the forward direction, and a second pair of a write gap and a read gap are aligned for sensing alignment during movement of the media in the reverse direction. Of course, the same write gap may be used by both read gaps, or a single read gap may be provided with two write gaps to achieve the same effect. The read gaps 30 have a read gap width 37 that can be either the same as or different from the write gap width 21.

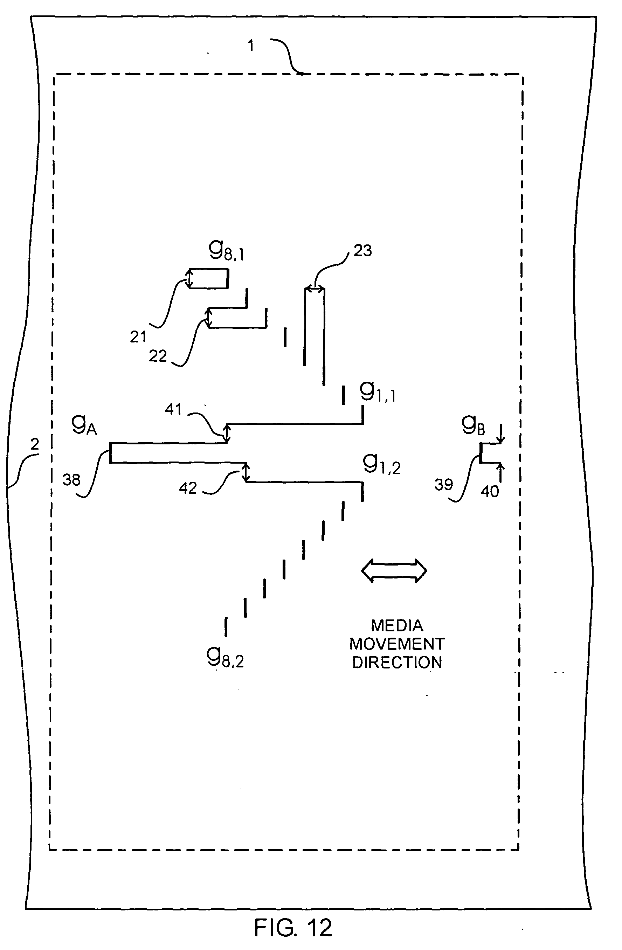

**Figure 12** shows a configuration of the read gaps 38 (g_{A}) and 39(g_{B}) that are placed in between two write rows and that have a guard band 41 and 42 to the closest adjacent write gaps g_{1,1} and g_{1,2}. The read gaps 38 and 39 have a read gap width 40 that can be either the same as or different from the write gap width 21.

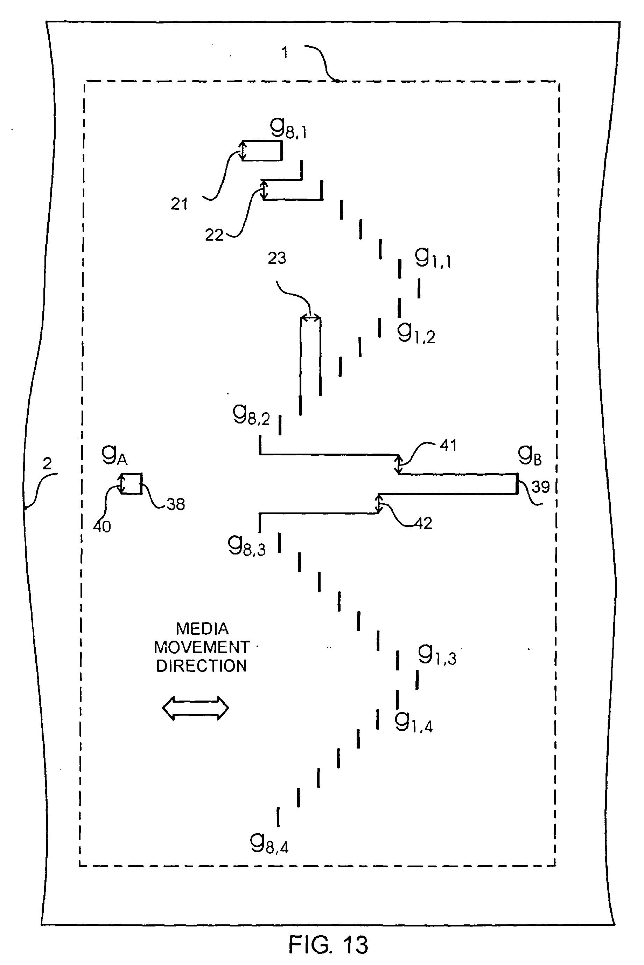

**Figure 13** shows a configuration of the read gaps 38 (g_{A}) and 39(g_{B}) which are placed in between four write rows and which have a guard band 41 and 42 to the closest adjacent write gaps g_{8,2} and g_{8,3}. The read gaps 38 and 39 have a read gap width 40 that can be either the same as or different from the write gap width 21.

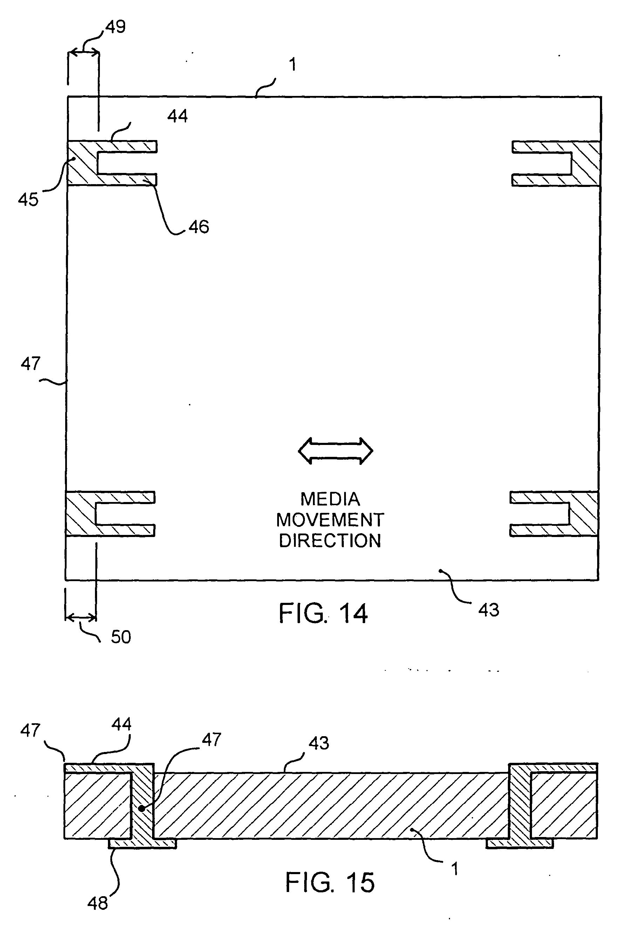

**Figure 14** shows the substrate 1 with a surface 43 that faces the recording media. The write gaps are not shown in this figure for the sake of simplicity. The substrate 1 has an edge 47 that is perpendicular to the direction of motion of the tape media. On the surface 43 is applied an edge sensor 44 made of a conductive material and formed by a resistance pad 45 with connectors 46. The resistance pad 45 is a part of the edge 47. A change of the ' resistance pad width 49 and 50 is shown in the figure.

Any wear of the edge 47 of the substrate 1 is detectable by determining changes in the resistance of the edge sensor 44. The wear at the edge 47 of the substrate 1 may be caused by use of the matrix head. The edge sensor 44 may also be used to measure the extent of wear during a lapping operation during chip manufacture, or during chip assembly.

In a preferred embodiment, two or more edge sensors 44 are provided so that asymmetrical wear and/or asymmetrical lapping is detected, assuring symmetrical lapping of the head during manufacture and assuring proper alignment of the head during use.

**Figure 15** shows a cross section of the substrate with the edge sensor 44 which is connected to solder pads 48 on the rear side of the substrate 1 opposite the surface 43 by a connection 47. Resistance changes measured over the pads 48 will provide information about changes in the distances 49 and 50 and thus changes in the edge 47 (see Figure 14). The edge sensor 44 is the outermost layer on the substrate 1. The write gaps are not shown in this figure for the sake of simplicity.

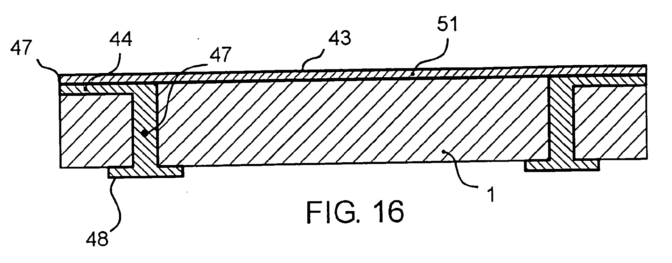

**Figure 16** shows a similar configuration as in **Figure 15** but with an additional protective layer 51 which is the outermost layer of the substrate 1. The edge sensor 44 is thus no longer the outermost layer, but is near the outermost layer. The write gaps are not shown in this figure for the sake of simplicity.

For purposes of the present invention, the references to recording media and to tape shall include all manner of recording media, including tape, hard discs, floppy discs, etc.

While the above description contains many specifics, these should not be construed as limitations on the scope of the invention, but rather as an exemplification of some of the presently preferred embodiments of this invention. Many other variations are possible. For example the number of adjacent rows is not limited to two or four as shown in the examples but rather will be defined by track format, write head size and area available on one single chip.

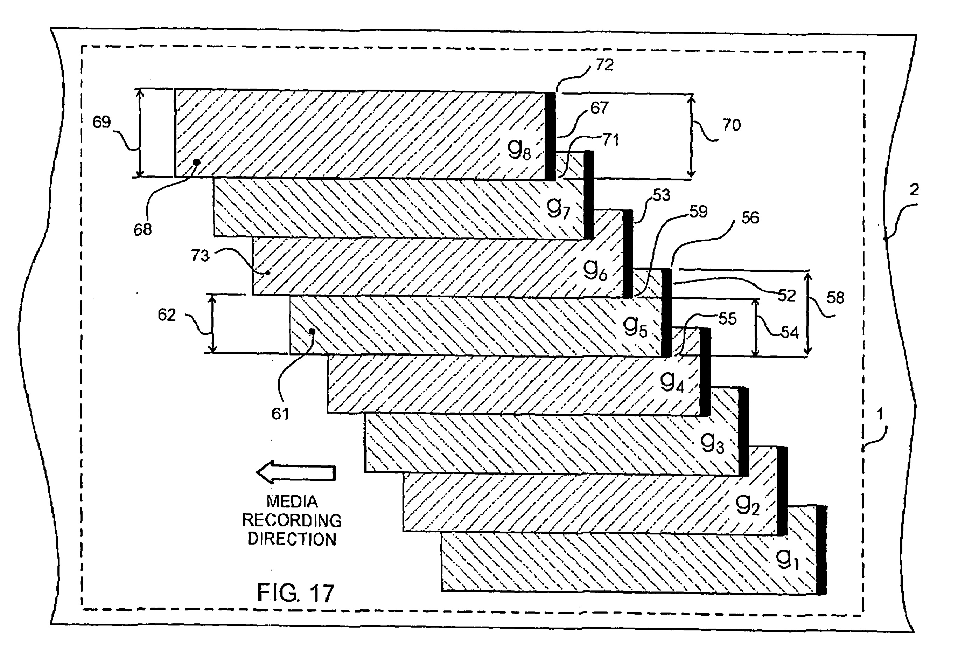

**Figure 17** shows an example of a single row layout of write gaps g₁ - g₈ in a matrix write head 1 configured so that any track (n), except the last written track, is partially overwritten by an adjacent track (n+1). For example the track 61 written by gap 52(g₅) is overwritten by adjacent track 73 written by gap 53(g₆) as the gap width 58 is larger then track pitch 54. For any track, except of the last track 68 written by gap 67(g₈), the track width is defined by edges of gaps corresponding to both overwritten and overwriting tracks. For example the track width 62 of track 61 is defined by the gap edge 55 of gap 52(g₅) and by the gap edge 59 of gap 53(g₆). The track width 69 of the last written track 68 is defined by the gap width 70 of write gap 67(g₈). The write gap width 70 is defined by the edges 71 and 72 of write gap 67(g₈). The magnitude of track overwrite (the difference between track pitch 54 and gap width 58) is supposed to be large enough to avoid occurrence of a guardband when the matrix write head is angularly deviated with respect to the direction of movement of the recording media. The above description is valid for the recording media 2 moving in the direction from (g₁) to (g₈). If the direction of movement of the recording media 2 changes so that it moves from (g₈) to (g₁), the track width of each track will be defined by different gap edges and the last written track will be written by the gap (g₁) (this case is not shown on the figure).

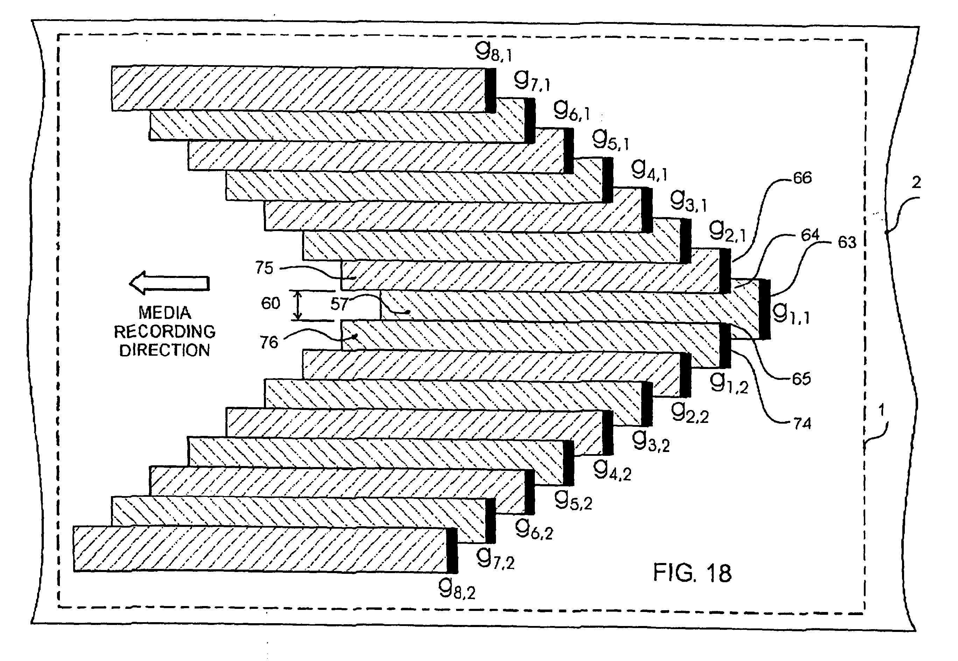

**Figure 18** shows example similar to the one from **Figure 17**, but with two rows in a plough configuration. Row (g_{1,1}-g_{8,1}) and row (g_{1,2}-g_{8,2}) are shown. In this case the track 57 written by gap 63(g_{1,1}) is overwritten from one side by an adjacent track 75 written by gap 66 (g_{2,1}) and from other side by an adjacent track 76 written by the gap 74(g_{1,2}). The track width 60 of the track 57 is thus defined by the edge 64 of gap (g_{2,1}) from one side and by the edge 65 of gap 74(g_{1,2}) from the other side.

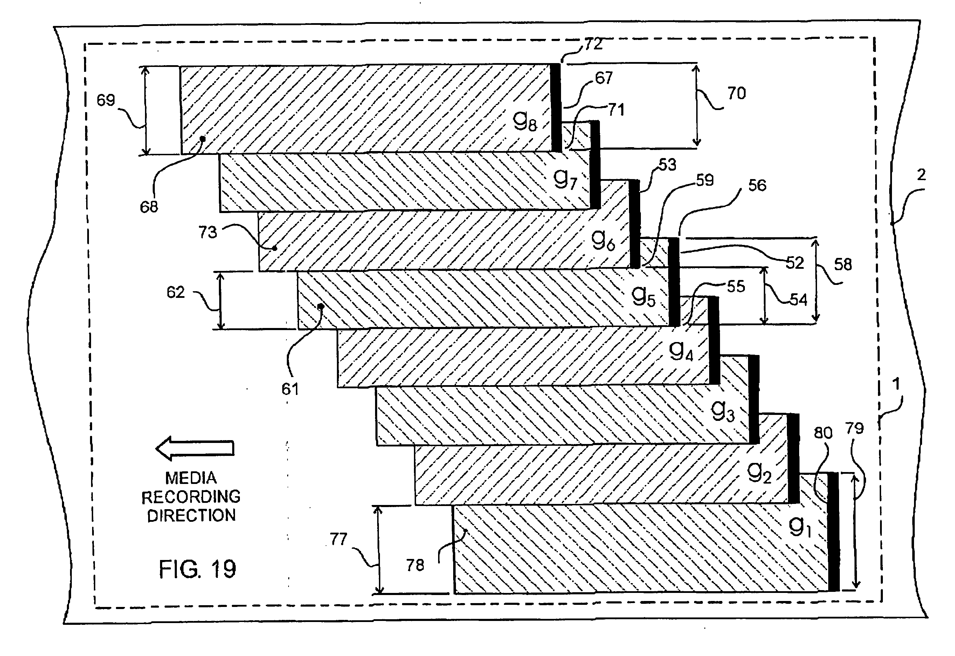

**Figure 19** shows an example similar to the one from **Figure 17**, but showing the option that will provide both outermost tracks wider. The gap width 79 of gap 80 (g₁) is extended with respect to other gaps in the configuration in order to provide a track width 77 of the track 78 that is equal or close to the track width 69 of the track 68. The gap width 70 of the last gap 67 (g₈) may be different from the gap width of the other gaps inside the track package (g₂-g₇), and provide the track width 69 of track 67 which is most convenient with respect to the lateral movement of tape.

Although other modifications and changes may be suggested by those skilled in the art, it is the intention of the inventors to embody within the patent warranted hereon all changes and modifications as reasonably and properly come within the scope of their contribution to the art.

The features disclosed in the foregoing description, in the claims and/or in the accompanying drawings may, both separately and in any combination thereof, be material for realising the invention in diverse forms thereof.

## Claims

1. A write head configuration for recording on magnetic media, comprising:
a non-magnetic substrate;
an excitation conductor on said substrate;
poles in magnetic contact with said excitation conductor and disposed relative to one another to define a write gap, one side of said write gap being at an outermost part of said write head.

2. A write head configuration as claimed in claim 1, wherein said poles extend outward from said excitation conductor in a plane parallel to a major surface of said substrate.

3. A write head configuration as claimed in claim 1, further comprising:
a plurality of excitation conductors on said substrate;
a plurality of poles on said excitation conductors defining a plurality of write gaps, said write gaps being arranged in a plough pattern.

4. A write head configuration as claimed in claim 3, wherein said write gaps are arranged so that no guard band is present when said write head configuration is moved over a recording media.

5. A write head matrix, comprising:
a non-magnetic substrate; and
a plurality of write heads in said substrate, said write heads having write gaps, said write gaps of said write heads being arranged to form a plough formation, said plough formation being free of guard bands between adjacent rows of said write gaps.

6. A write head assembly, comprising:
a plough configuration of write heads, said write heads being offset by at most one column in a tape movement direction, said plough configuration providing a minimal width variation of a package of written tracks when the write head assembly is tilted with respect to the tape movement direction.

7. A matrix write head assembly, comprising:
a substrate;
a plurality of write heads disposed on said substrate, said write heads each having a write gap, said write gaps being disposed in a gradual distribution.

8. A matrix write head assembly, comprising:
a substrate;
a plurality of write heads disposed on said substrate; and
a plurality of read heads disposed on said substrate, said read heads being provided in pairs and aligned with one another in a direction of recording media movement so as to read a servo track on the recording media and thereby provide feedback on angular deviations of the matrix write head relative to the recording media.

9. A matrix write head assembly, comprising:
a substrate;
a plurality of write heads disposed on said substrate; and at least one read head on said substrate to read a servo track on the recording media and thereby provide feedback on lateral deviations of the matrix write head relative to the recording media.

10. A matrix write head assembly, comprising:
a substrate;
a plurality of write heads disposed on said substrate; and
a read head on said substrate, said read head being aligned with one of said write heads in a direction of recording media movement so as to read a track written by said one of said write heads on the recording media and thereby provide feedback on angular deviations of the matrix write head relative to the recording media.

11. A matrix write head assembly as claimed in claim 10, wherein said direction of recording media movement is a first direction, and further comprising:
a further read head on said substrate, said further read head being aligned with a further of said write heads in a second direction of recording media movement opposite to said first direction of recording media movement so as to read a track written by said further of said write heads during movement of said recording media in said second direction and thereby provide feedback on angular deviations of the matrix write head relative to the recording media.

12. A matrix write head assembly, comprising:
a substrate;
a plurality of write heads on said substrate;
an edge sensor on said substrate at an edge of said substrate.

13. A matrix write head assembly as claimed in claim 12, wherein said edge sensor is a first edge sensor, and further comprising:
a second edge sensor at an edge of said substrate.

14. A matrix write head assembly as claimed in claim 12, wherein said edge sensor is an outermost layer on said substrate.

15. A matrix write head assembly as claimed in claim 12, wherein said edge sensor is very close to an outermost layer on said substrate.

16. A write head assembly, comprising:
a substrate
a plurality of write heads disposed on said substrate in such way that each said write head is offset to a neighbor head by a track pitch in a direction perpendicular to media motion, said write heads each having a write gap, said write gaps each having a gap width, said gap width being larger than said track pitch so that tracks generated by such head will partially overwrite each other when moving over a recording media.
